# EUROPEAN PATENT APPLICATION

(11) **EP 1 024 052 A1**
(43) Date of publication of application: **02.08.2000**
(21) Application number: 99830043.8
(22) Date of filing: 29.01.1999
(51) Int. Cl.: B60R 9/058

(54) **A device for attaching a bar carrier on a vehicle roof**

(71) Applicant: Csl Spa, 10040 La Loggia (Torino) (IT)
(72) Inventor: Germano, Gianpiero, 10025 Pino Torinese (Torino) (IT)
(74) Representative: Robba, Pierpaolo

(57) **Abstract**

Device for fixing a bar carrier (12) on the roof of a vehicle comprising a support (10) provided with, on one end, first means for fixing said support (10) to the vehicle roof and, on the opposite end, second means for fixing said bar (12) into said support (10), said second means being provided with a drive cam lever (62) and with an equalizer (60) which can oscillate, operating manually on said cam lever (62), between a release position, in which said bar (12) is free with respect to said support (10), and an engagement position in which said bar (12) is locked into said support (10).

## Description

The present invention refers to a device for attaching a bar carrier on a vehicle roof.

As it is well known, for transporting objects on a vehicle roof are generally used bar carriers placed transversally to the advancement direction of the vehicle and fixed to the sides of the roof by means of suitable fixing means.

In the simplest versions commercially available the bar is fixed to the fixing means by screws, rivets or welds and, consequently, the distance between the fixing means cannot be modified.

However, the distance between the lateral sides of a vehicle roof varies according to vehicle models and it is therefore necessary to adapt the reciprocal distance between the fixing means along the bar carrier.

At present are commercially available fixing devices in which it is possible to slide the fixing devices themselves along the bar up to the desired position.

Subsequently, the devices are clamped on the bar by means of suitable locking means.

An example of a known device of this later type is shown in the Italian Utility Model Patent n. 205322.

The fixing means shown in said Utility Model Patent comprises a cam lever hinged to the walls of a metal support and having an eccentric surface that presses against the bar when the lever is manually locked.

According to the teaching of said patent, when the cam lever is in the open position, it is possible to slide the fixing means along the bar, up to reaching the desired position.

Subsequently, the bar is locked in the support thanks only to the force impressed by the cam lever whose eccentric surface presses against the bar upwardly, when the device is placed on a vehicle roof.

This characteristic, although having the advantage of allowing a quick and easy locking/unlocking of the bar carrier relative to the fixing means, is however ineffective for firmly holding the bar in the support and does not guarantee a reliable clamping when on the bar are applied high stresses due to particularly heavy loads or to the vehicle riding on ravelled grounds.

Another drawback of the prior art rises from the fact that the locking of the bar in the support is made applying a downward pressure in only one point of the bar.

In particular working conditions the point wherein the pressure is applied becomes a fulcrum on which the bar can swing thanks to the clearance between the components of the fixing means.

This defect is particularly evident when the fixing means on the bar extremities are tightened on the vehicle roof with excessive strength.

Experimentally, has been observed that in that circumstance, during fixing of the devices on the roof, the supports in which the bar is inserted, when fixed on the vehicle, tend to rotate relative to the bar causing an unpleasant anti-aesthetic effect.

A first object of the present invention it is therefore to provide a device for attaching a bar on a vehicle roof that, maintaining the characteristics of practical use of the utility patent cited, allows a safe locking of the bar carrier in every working condition, also under heavy use.

Another object of the present invention is to provide a fixing device that allows the locking of the bar in the support reducing the possibility of rotation of the support relative to the bar when the device is mounted on a vehicle roof.

The above and other objects of the present invention are obtained with the fixing device as claimed in the enclosed claims.

The above objects will result more clear from the detailed description of a preferred embodiment of the invention with particular reference to the accompanying drawings in which:
Figure 1 is a lateral view of the device according to the invention in a configuration with cam lever open;
Figure 2 is a lateral view of the device according to the invention in a configuration with cam lever closed;
Figure 3 is a lateral view of the device according to the invention in a configuration with cam lever open according to a first embodiment of the fixing bracket; and
Figure 4 is a lateral view of the device according to the invention in a configuration with cam lever open according to a second embodiment of the fixing bracket.

With reference to the accompanying drawings, the fixing device according to the invention comprises a support 10 provided with first means for fixing the device on the edge of a vehicle roof (not shown) and with second means for fixing a bar carrier 12 into said support.

The support 10 is preferably made of stamped plate and presents, when placed onto the vehicle, a transversal portion having a upside-down "U" shape in which are defined two lateral walls 10a and an upper wall 10b against which leans the bar 12 when is placed into the support 10.

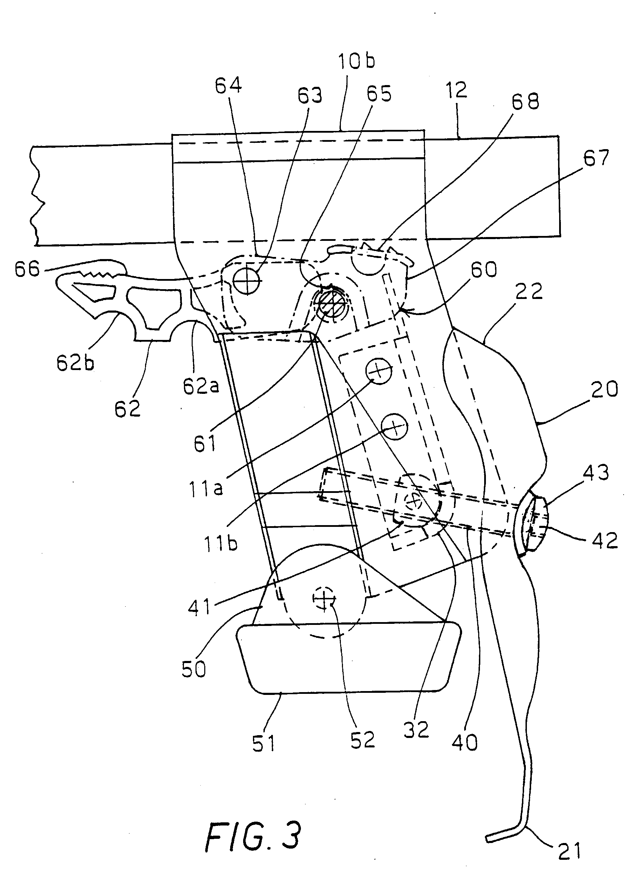

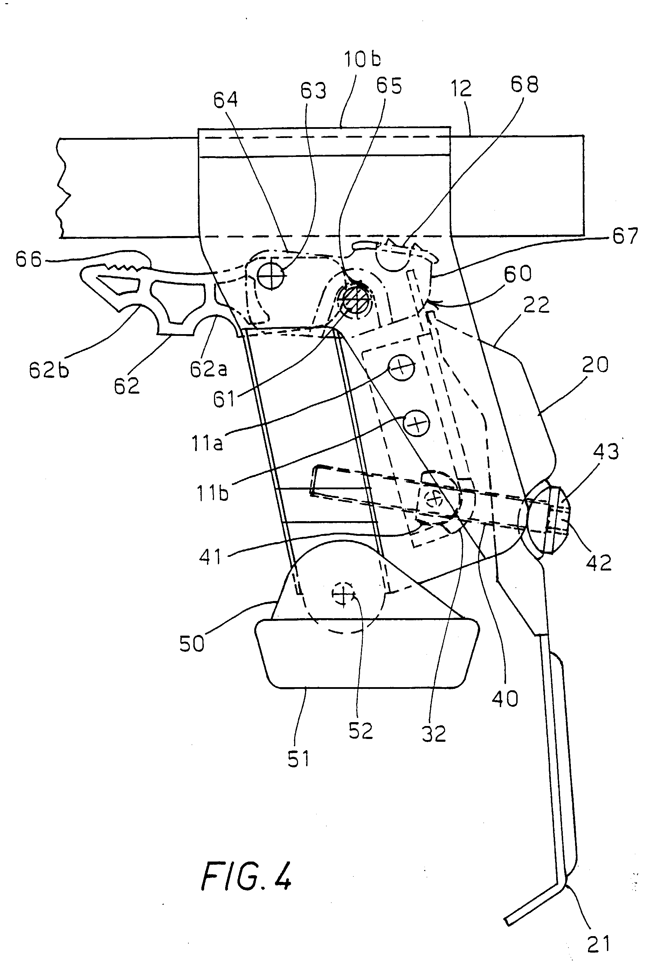

In the embodiment shown in figures 3 and 4, said first means for fixing the device on the vehicle roof comprise a bracket 20 suitably shaped according to the vehicle model on which the device is mounted.

More precisely, the bracket 20 has a first end 21, bent for engaging in the lateral side of the vehicle roof, and a second end 22 shaped so that it can be leaned (figure 3) against the lateral walls 10a of the support 10.

Alternatively, as shown in figure 4, said second end 22 is shaped so that it can be leaned against a ledge portion 31 obtained on the extension of an element 30 placed internally to support 10 and constrained to walls 10a of said support 10 by means of a couple of rivets 11a, 11b or by welding.

A bolt 40, engaging with a nut 41 housed inside support 10 near element 30, is provided in order to close the bracket 20 against the support 10 and to lock the device on the vehicle roof.

Advantageously, said nut 41 is housed in a fold 32 in the element 30 so that it can oscillate following the direction taken by the bolt 40 during fixing of the device.

Said bolt 40 can be driven operating on its head 43 by means of a suitable spanner (not shown) inserted in an axial hole 42 accessible from outside the device.

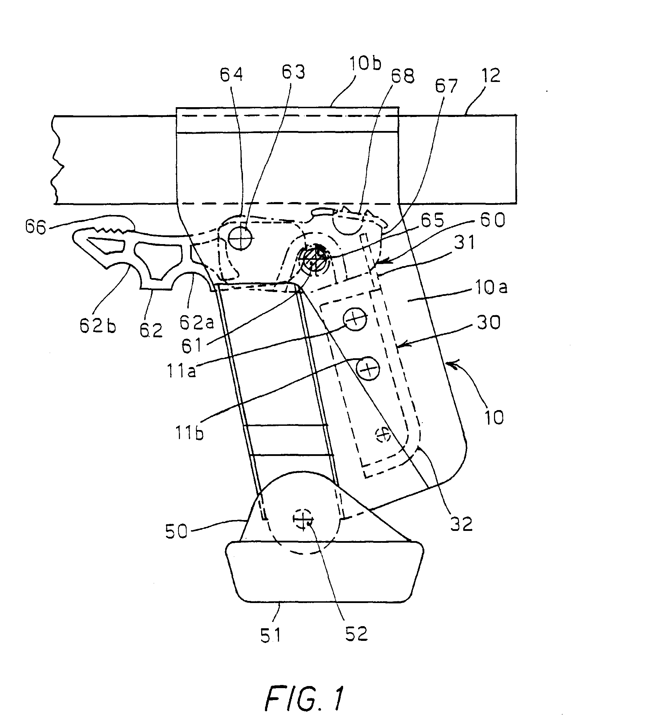

Referring again to figures 1 to 4, a foot 50, provided, with a soft plastic covering 51, is provided hinged in 52 to the base of support 10 in order to allow the support 10 to rest on the vehicle roof without damaging its surface.

Advantageously, said second means for locking the bar 12 in the support comprise an equalizer 60, hinged in 61 to the walls 10a of the support 10, and a cam lever 62 pivoted in 63 to one of the ends 64 of said equalizer 60.

Said cam lever 62 has a first eccentric end 65 and a second end 66 extended and adapted to be manually operated by the pressure of only one finger.

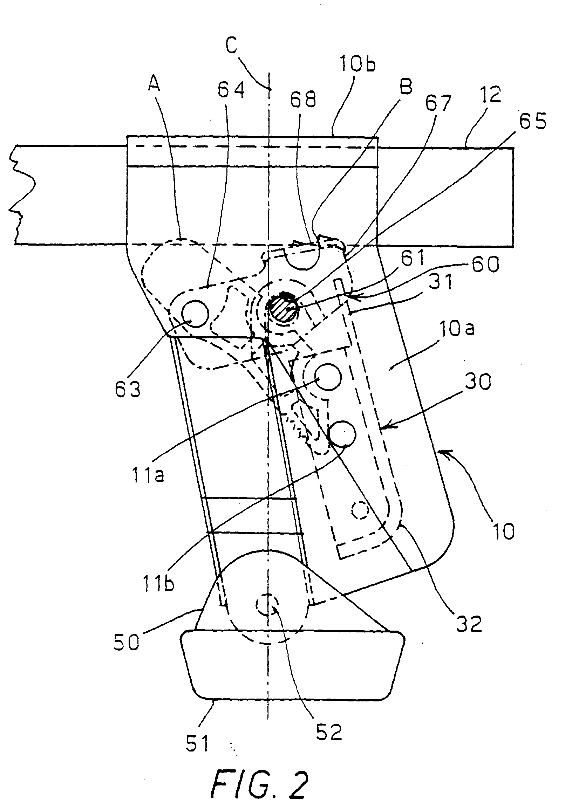

As shown in figure 2, the eccentric end 65 of the cam lever 62 presses against bar 12 when the cam lever 62 is rotated to take the extended end 66 into support 10 between walls 10a.

A second end 67 of said equalizer 60 is provided with a notched surface 68 that presses against bar 12, locking it into support 10, when said cam lever 62 presses by means of its eccentric end 65 against bar 12 following the rotation of the extended end 66 towards the interior of support 10.

According to a preferred embodiment of the invention, with the purpose of decreasing the stress necessary for closing the cam lever 62 and of lengthening sufficiently its travel for allowing a handy manual operation, the equalizer 60 is hinged so that the lever arm on which operates the cam lever 62 has a length greater then the lever arm on which acts the resistance opposed by bar 12.

Advantageously, the cam lever 62 is made of coloured plastic material so that it is easily identifiable during assembly operations and presents on its wall facing support 10 a couple of recesses 62a and 62b suitable for receiving, when the cam is closed, respectively, the pivot 61 around which rotates the equalizer 60 and the rivet 11a, eventually provided for fixing the element 30.

In the configuration shown in figure 2, the bar 12 is therefore pressed against the inner portion of wall 10b of the support 10 in two spaced points A and B coinciding, respectively, with the point of support of the eccentric surface 65 and with the point of support of the notched surface 68 against bar 12.

Preferably, the points A and B are chosen so that they comprise between them, substantially in a median position, the line C normal to bar 12 and passing by hinging point 52 of the foot 50, pointed out in figure 2 by chain, when the device is placed on the vehicle.

Thanks to this expedient, it is avoided the risk that the support 10 is rotated relative to bar 12 showing, when the device is placed, a clearance between bar 12 and the surface 10b against which said bar rests.

The mounting operations of a roof rack for vehicles incorporating the fixing device according to the invention provide for the insertion of bar 12 in a couple of devices according to the invention having the cam levers facing one to the other and in open position.

Subsequently, the fixing devices are slid on the bar 12 up to desired position, corresponding to a distance between the devices suitable for the width of the roof on which the bar is to be mounted.

Once reached the optimal distance, the cam lever 62 of each device is closed and the bar can be mounted on the vehicle roof operating on the bolt 40 of each device in order to clamp the corresponding bracket 20.

The removal of the carrier bar is made by applying in reverse order the operations described above.

## Claims

1. Device for fixing a bar carrier (12) on the roof of a vehicle comprising a support (10) provided with, on one end, first means for fixing said support (10) to the roof of the vehicle and, on the opposite end, second means for fixing said bar (12) into said support (10), said second means being provided with a drive cam lever (62), characterised in that said second means further comprise an equalizer (60) which can oscillate, operating manually on said cam lever (62), between a release position, in which said bar (12) is free with respect to said support (10), and an engagement position in which said bar (12) is locked into said support (10).

2. Device according to claim 1, wherein said cam lever (62) has a first eccentric end (65) that presses against said bar (12) when said cam lever (62) is rotated for taking the equalizer (60) in the engagement position.

3. Device according to claim 2, wherein said cam lever (62) is pivoted to a first end (64) of said equalizer (60).

4. Device according to claim 3, wherein said equalizer (60) has on a second end (67) a notched surface (66) suitable for firmly locking the bar (12) when said equalizer (60) is taken in the engagement position.

5. Device according to claim 4, wherein said equalizer (60) is pivoted to said support (10) so that the lever arm on which acts the cam lever (62) is longer then the lever arm on which acts the resistance opposed by the bar (12).

6. Device according to claim 4 or 5, wherein said eccentric surface (65) and said notched surface (68) press against said bar (12) in two points (A and B) so spaced in order to avoid the rotation of the support (10) relative to the bar (12).

7. Device according to claim 6, wherein said eccentric surface (65) and said notched surface (68) are placed, respectively, towards the internal and the external of the vehicle, when the device is mounted on the vehicle roof.

8. Device according to any of the preceding claims, wherein said first means comprise a bracket (20) and a locking bolt (40) passing through said bracket (20) and engaging in a nut (41) provided in said support (10).

9. Device according to claim 8, wherein said bracket (20) has a first end (21) shaped as to adapt itself to the profile of the vehicle roof and a second end (22) shaped as to rest against the lateral walls (10a) of said support (10).

10. Device according to claim 8, wherein said bracket (20) has a first end (21) shaped as to adapt itself to the profile of the vehicle roof and a second end (22) shaped as to rest on an extension of an element (30) provided into said support (10).

11. Device according to any of the preceding claims, wherein support (10) is moreover provided with a bearing foot (50) hinged in (52) for bearing the device on the vehicle roof.

12. Device according to claim 11 when is dependent from claim 6 or claim 7, wherein the points (A) and (B) are chosen so that they comprise between them, substantially in a median position, the line (C) normal to bar (12) and passing across the hinging point (52) of the foot (50), when the device is mounted on a vehicle roof.
